# EUROPEAN PATENT APPLICATION

(11) **EP 1 610 521 A1**
(43) Date of publication of application: **28.12.2005**
(21) Application number: 04425466.2
(22) Date of filing: 25.06.2004
(51) Int. Cl.: H04L 29/06, G06F 9/445, H04Q 7/32

(54) **Method of and apparatus for application download in communication systems supporting presence services**

(71) Applicant: Siemens Mobile Communications S.p.A., 20126 Milano (IT)
(72) Inventor: Bossoli, Francesca, 50019 Sesto Fiorentino (FI) (IT); Pensa, Simone, 20094 Milan (IT)

(57) **Abstract**

The invention concerns a method of and an apparatus for software, in particular applications, download to users of a telecommunication system supporting presence services. For each user that is a subscriber of a download service, a database (DB) connected to a download server (AAD) stores a user profile with information about the applications stored in the user equipment (UE). When a new application or a new release becomes available, the download server (AAD) checks which subscribers need it, recovers the presence status of such subscribers (UE) from a presence server (PS), and downloads the application or the update to the users which are on line. For users off-line, a store and forward mechanism is implemented.

## Description

### Field of the invention

The present invention refers to communication systems supporting presence services, and more particularly it concerns a method of and an apparatus for automatic software application download to users of said services in such systems.

Preferably, but not exclusively, the invention is intended for application download to users of mobile communication systems.

### Background of the Invention

Software download through mobile networks is becoming an important issue for mobile telecommunications industry and operators. Already in present mobile communication systems there is an increasing demand by the users for software download concerning ringing tones, screen savers, games and Java midlets. Users of mobile communication systems of the third generation and beyond are expected to make wide use of software download for upgrading or reconfiguring their terminals or for updating software applications existing on their terminals.

The paper "A PUSH download architecture for software defined radios", presented by S. Jamadagni and M.N. Umesh at the 2000 IEEE International Conference on Personal Mobile Communications, Hyderabad, India, 17 - 20 December 2000, and published at pages 404 and ff. of conference proceedings, discloses a solution to the problem of downloading software to a radio terminal in a Software Defined Radio (SDR) environment, both for initial download and for subsequent updating. The possibility of adopting a PUSH technique (that is, the information intended for a user is sent by the network without any request by the user) is suggested, in order to reduce network traffic. The technique referred to as "Pure-Push" provides for a periodic software download to the client, who however is to periodically inform the system about the actual configuration of his/her terminal. This entails a rather high usage of the uplink radio resources. Also the need for a mutual authentication whenever an update is to be carried out adds to the high usage of radio resources. Moreover, the application of the proposals to the SDR environment entails a dependency on the access technology. This is clearly a problem for future systems where different access technologies will coexist.

EP 03425706.3 discloses a method of and an apparatus for mass software download for terminal reconfiguration, exploiting the Multimedia Broadcast/Multicast Service (MBMS) defined by 3GPP (3rd Generation Partnership Project).

The present invention aims at providing a download method and apparatus that are wholly independent of the access technology and that, when applied to mobile systems, minimise the radio resource usage.

### Summary of the invention

The invention provides, in a first aspect, a method of software download to users of a telecommunication system supporting presence services, comprising the steps of:
- storing information about software items concerned by a download service, as well a user profile for each user that is a subscriber of the download service, said profile including information about any such software item present in a user equipment;
- monitoring the presence status of the subscribers; and
- downloading a software item newly made available by a provider to subscribers who need said item and who are in a first presence status, indicating that they are logged on, when said software item becomes available.

In a second aspect of the invention, there is provided an apparatus for implementing the method, comprising:
- a storage unit, storing information about software items concerned by a download service and, for each user that is a subscriber of the download service, a user profile including information about any such software item present in a user equipment; and
- a download server, connected to: an application provider, for receiving therefrom software items to be downloaded to the subscribers; a presence server, for monitoring the presence status of the subscribers; said storage unit, for recovering the user profile and detecting whether any subscriber needs a software item provided by the software provider; and to a communication network of said telecommunication system for delivering said software item to subscribers who need it and who are in a first presence status, indicating that they are logged on to the system, when said item becomes available.
   The invention also concerns a telecommunication system, preferably a mobile telecommunication system, supporting the method and including the apparatus.

### Brief description of the drawings

A preferred embodiment of the invention, given by way of non-limiting example, will now be disclosed with reference to the accompanying drawings, in which:
- Fig. 1 is a schematic diagram showing the application of the invention applied in a mobile communication system;
- Fig. 2 is a schematic block diagram of the download server; and
- Fig. 3 is a diagram of the download procedure.

### Detailed description of the preferred embodiments

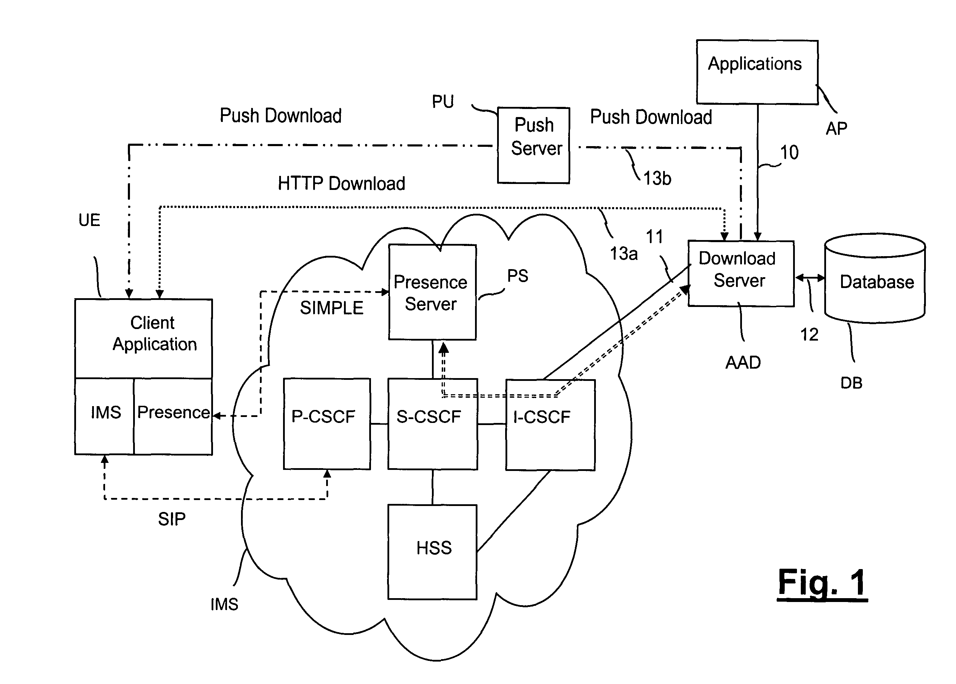

The embodiment shown in Fig. 1 refers, by way of example, to software download to users having access to a presence service organised according to 3GPP (3rd Generation Partnership Project) specifications. The described solution envisages the involvement of the so-called IMS [IP (Internet Protocol) Multimedia Subsystem] architecture and Presence Enabling Services.

Under this assumption, the equipment of the end users, one of which is shown at UE, has a presence IMS client (as denoted by blocks IMS and Presence within UE), i.e. the end user is able to access to IMS and Presence Services, by using SIP (Session Initiation Protocol) and SIMPLE (SIP for Instant Messaging and Presence Leveraging Extensions) protocols, the latter being the SIP extension for presence. Details about IMS and Presence Services within a 3GPP system can be found in 3GPP technical specifications TS 23.228 and 24.228 for IMS, and TS 22.141 and 23.141 for Presence Services.

The IMS architecture is here schematised by the units intended with Call Session Control Functions (CSCF), more specifically P-CSCF (Proxy CSCF), S-CSCF (Serving CSCF) and I-CSCF (Interrogating CSCF), by the presence server PS, and by the Home Subscriber Server HSS, i.e. the unit entrusted with storage of the data relevant to the presence service users. Those units are all defined in the specifications indicated above. Presence server PS and block P-CSCF are shown as dialoguing with the corresponding presence and IMS client functions in terminal UE. The dialogue protocol (SIMPLE and SIP, respectively) is also indicated.

For sake of simplicity, the chain of the conventional mobile network units (namely, radio access network, core network, SGSN, GGSN) through which a user equipment has access to IMS is not shown.

End users UE also have on their equipment a number of software applications (Client Application in block UE) and the invention provides a method of and an apparatus for updating such applications or loading new applications, by leveraging the presence information of the users themselves and the IMS architecture. The service is thus offered to:
- applications providers, which are able to easily provide software download for updating client applications;
- end users, who receive download nearly automatically, without making ad hoc query to the application server.

Download is managed by a download server AAD (Automatic Application Download), which is part of the operator network, like IMS. Server AAD is connected, as shown by line 10, to an application repository owned by an application provider AP. AAD receives the software to be downloaded (for instance, a new patch or a new release) from the provider and forwards it to the concerned users, if they are logged on (presence status "on-line").

In order AAD can exploit the presence information of the users, it is to interact with presence server PS, as schematised by the dashed double line. Reference 11 denotes the connection between AAD and IMS (in particular I-CSCF). For each registered user, AAD subscribes to PS for retrieving presence information and being always informed on the presence status ("on-line"/"off-line") of the subscribers. Subscription to the service by a user UE in turn implies that the user authorises AAD to get his/her presence status, so that AAD is an authorised watcher.

In order to allow an almost automatic download, download server AAD is connected, as indicated by line 12, with a data base DB storing information about the applications installed to the clients and managed by the service, together with end user identification. A possible organisation of the contents of data base DB can be as shown in the following table for two applications:

| Application | Version | End user |
|---|---|---|
| Application1 | 1.0 | u1, u3 |
| | 1.5 | u4, u7 |
| | 2.0 | u5, u2 |
| Application2 | ab01 | u10, u17 |
| | ab02 | u3, u13 |

Thanks to the provision of database DB, as soon as a new version of software is available, AAD can recognise which subscribers need it and, base upn the presence information, inform "on-line" subscribers that a new patch is available. The patch can be delivered to the end user following one of two mechanisms:
1) AAD sends a notification message towards the end user device, which will start an HTPP download session (dotted line arrow 13a); software download by means of an HTTP session is known in se, as disclosed for instance in the document "Generic Content Download Over the Air Specification" (OMA-Download-OTA-v.1_0-20020912-p published by OMA (Open Mobile Alliance);
2) The software upgrade is sent using a PUSH message after the end user confirmation (dashed-and-dotted line arrow 13b).

The second approach is preferable, even if it requires the insertion of a Push Server PU, as it minimises impact on user experience: download mechanisms should be nearly automatic, apart from end user confirmation. The end user decides at subscription time the mechanism of download he/she prefers. This parameter can be modified at any time by changing the service preferences.

The tasks and the operation of a push server are disclosed in 3GPP TR 23.974 v2.0.0, Support of push Services.

In case the user is "off-line" at the moment the update becomes available, a mechanism of store-and-forward can be envisaged.

Before starting download, AAD modifies the end user status, by sending a publishing message to PS, in which AAD specifies that the user is in a "busy" status: in such way any other users/applications will not disturb the end user during download. At the end of download process, AAD restores the end user status as "on-line". AAD is therefore an authorised Network Agent, i.e. it is acknowledged by presence server PS as a so-called "presence information provider".

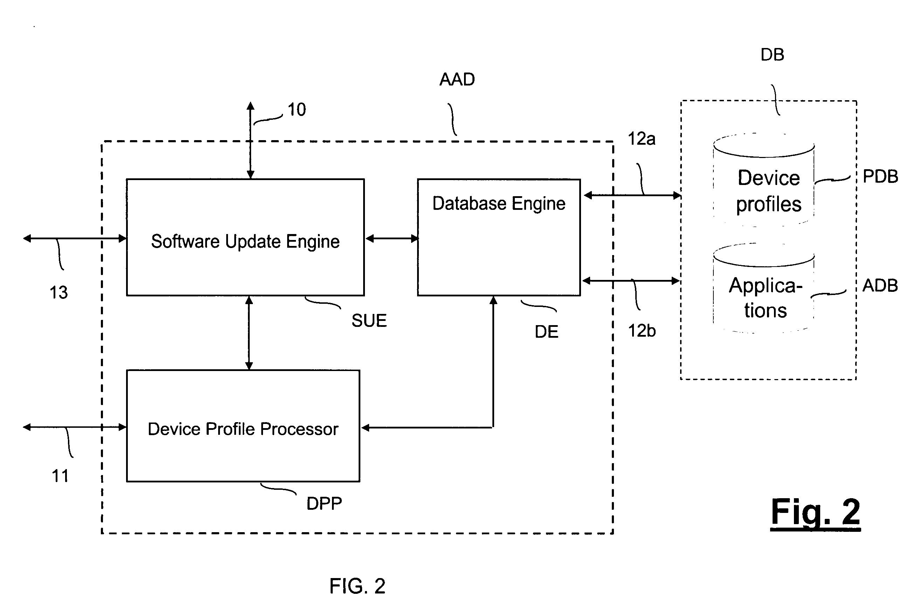

Fig. 2 shows a functional diagram of database DB and download server AAD.

Database DB has been shown as being formed by an application database ADB, storing the information about the most recent release of each application concerned by the download service, and device profile database PDB, which stores the information about the applications (and the relevant releases) present in the subscribers' equipment, as well as the subscriber's identities. PDB and ADB are connected to AAD through respective connections 12a, 12b, forming connection 12 of Fig. 1.

AAD in turn comprises a software update engine SUE, a database engine DE and a device profile processor DPP. Software update engine SUE receives the new applications or application updates from application provider AP, through connection 10, and recovers the list of the users who need the application or the update from device profile database PDB, through database engine DE interfacing AAD with database DB,. The list is filtered by device profile processor DPP, which is connected to IMS (Fig. 1) through connection 11 and gets from presence server PS the information about which users in the list are presently on line and are therefore available to receive the update. Device profile processor DPP can then command the actual download from SUE to the on-line involved users through connection 13, corresponding to either of connections 13a, 13b in Fig. 1, depending on the download technique. At the same time, SUE can update application database ADB through DE, by writing the identity of the new release (or the new application) that has become available. Before the download, DPP modifies the user's presence information, as stated before. Once the download has ended DPP updates device profile database PDB, always through DE, by writing the information that a certain release of an application or a certain application has been supplied to certain users.

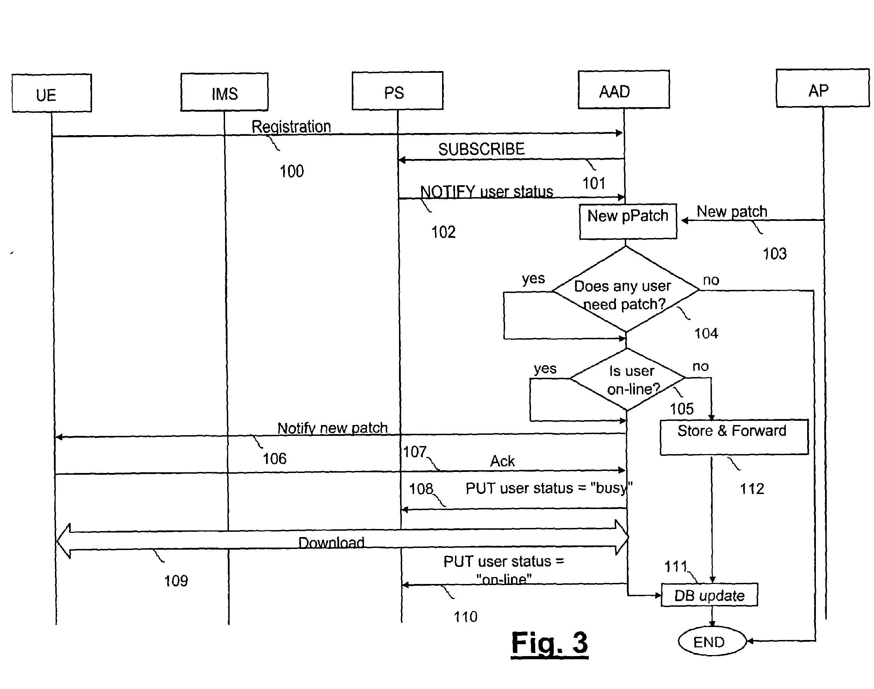

The download mechanism is disclosed also with reference to the signalling flow chart of Fig. 3. The procedure is the same in case of both HTTP and PUSH download. The Figure shows the minimum message exchange that allows an end user to access the service.

The first step is the end user registration with the service (step 100). In such phase, the user informs AAD about the applications he/she has and the relevant versions. This information is stored in database DB (Fig. 1) together with the user identity. At the subscription, the user specifies also the desired download mechanism, as stated before.

For each subscriber, AAD performs the SUBSCRIBE procedure to PS for end user presence status (step 101). Thus AAD becomes an authorised watcher, according to TS 23.141, and PS will notify the end-user presence status ("on-line"/"off-line") to AAD (step 102).

When application provider AP informs AAD that a new software release is available (step 103), AAD checks in DB whether any subscriber needs this release (step 104). If no user needs the release, the process ends. If some users need the release, the following user-application relations can occur:
a) Updated: the application is installed and updated to the previous release;
b) Out of date: the application is installed but not updated to the previous release;
c) Not installed: the application is not installed on the device.

AAD verifies the status of such user(s) (step 105). In case the user status is "on-line" (output "yes") of step 105, AAD notifies to the user that an update for his/her applications is available (step 106). In particular, referring to user-application relations indicated above, AAD informs the end user that:
a) a new update is available for an application;
b) multiple updates are available for the application;
c) a new application is available.

If the user acknowledges the update (step 107), the download session is started (step 109), and AAD updates the end user presence information to "busy" by sending a PUBLISH message the PS (step 108). At the end of the download process, AAD will turn the end user presence status to "on-line" (step 110) and will update database DB (step 111). At that point, the process ends.

In case the user status is "off-line" (output "no" of step 105), the download process will not start and a store-and-forward mechanism can be adopted (step 112) for supplying the users with the software later on. The mechanism can provide for carrying out the download next time a new update is available or when the user status will change to "on-line". After the forward, the database will be updated as before.

Note that the download has been shown by a bi-directional arrow to take into account that in the case of HTTP download a certain dialogue between the user and the download server is necessary, as it is well known to the skilled in the art. Moreover, for sake of simplicity of the drawing, the updates of the application and device profile databases have been jointly shown at step 112.

Thus, the preceding description clearly shows that the invention solves the problems of the prior art. The download is substantially automatically managed by download server AAD, based on the presence status of the users, which only have to accept the update upon the notification by AAD. There is no need for the users to communicate their situation to the server. Thus the procedure is very simple and, in case of application to mobile systems, there is no unnecessary uplink radio resource occupation. Moreover, the service is independent of a specific access technique.

It is evident that the above description has been given by way of non-limiting example and that changes and modifications are possible without departing from the scope of the invention. In particular, the skilled in the art will have no problem in adapting the disclosed embodiment to presence services that do not exploit IMS architecture, by changing values "on-line", "off-line", "busy" status to the corresponding status provided for by the used protocols. Moreover, even if specific reference has been made to download of applications, the method and the apparatus can be used for downloading any kind of software item.

## Claims

1. A method of software download to users of a telecommunication system supporting presence services, **characterised in that** it comprises the steps of:
- storing information about software items concerned by a download service, as well a user profile for each user that is a subscriber of the download service, said profile including information about any such software item present in a user equipment (UE);
- monitoring the presence status of the subscribers; and
- downloading a software item newly made available by a provider (AP) to subscribers who need said item and who are in a first presence status, indicating that they are logged on, when said software item becomes available.

2. The method as claimed in claim 1, **characterised in that**, for a subscriber who is not logged on when a new software item becomes available, said new software item is temporarily stored and is forwarded to the subscriber when the latter becomes logged on or when another software item becomes available.

3. The method as claimed in claim 1 or 2, **characterised in that** said download is preceded by a notification message informing the user of the existence of a newly available software item and is automatically performed upon an acknowledgement by the user.

4. The method as claimed in any preceding claim, **characterised in that** download is performed as an HTTP session.

5. The method as claimed in any of claims 1 to 4, **characterised in that** download is performed by means of PUSH message.

6. The method as claimed in claim 5 when referred back to claim 3, **characterised in that** said notification message includes information about the size of the software item and an estimation of the delivery time.

7. The method as claimed in any of claims 4 to 6, **characterised in that** the download modality is chosen at the subscription to the download service by the user, and it may be changed by the subscriber during the validity of the subscription.

8. The method as claimed in any preceding claim, **characterised in that**, before starting the download session, the subscriber presence status is set to a second status preventing the subscriber from being disturbed during download.

9. The method as claimed in any preceding claim, **characterised in that** it comprises the step of updating the information about the software items and the subscriber profiles when a software item becomes available and at the end of each download.

10. The method as claimed in any preceding claim, **characterised in that** the subscribers are users of a mobile communication network.

11. An apparatus for downloading software to users of a telecommunication system supporting presence services, **characterised in that** it comprises:
- a storage unit (DB), storing information about software items concerned by a download service and, for each user that is a subscriber of the download service, a user profile including information about any such software item present in a user equipment (UE); and
- a download server (AAD), connected to: an application provider (AP), for receiving therefrom software items to be downloaded to the subscribers; a presence server (PS), for monitoring the presence status of the subscribers; said storage unit (DB), for recovering the user profile and detecting whether any subscriber needs a software item provided by the software provider (AP); and to a communication network (13, 13a, 13b) of said telecommunication system for delivering said software item to subscribers who need it and who are in a first presence status, indicating that they are logged on to the system, when said item becomes available.

12. The apparatus as claimed in claim 11, **characterised in that** said download server (AAD) is arranged to temporarily store software items that cannot be delivered to a subscriber who is not logged on to the system at the moment a software item needed by such subscriber becomes available and to forward said item when the subscriber becomes logged on or when another software item needed by such subscriber becomes available.

13. The apparatus as claimed in claims 11 or 12, **characterised in that** said download server (AAD) is arranged to notify the availability of a new software item to the subscribers and to automatically perform said download upon receiving an acknowledgement by the subscribers.

14. The apparatus as claimed in any of claims 11 to 13, **characterised in that** said download server is arranged to deliver software items to a subscribers through a HTTP session.

15. The apparatus as claimed in any of claims 11 to 13, **characterised in that** it further comprise a PUSH server (PU) connected to the download server (AAD) for performing software download by means of PUSH messages.

16. The apparatus as claimed in claims 15 when referred back to claim 13, **characterised in that** said download server (AAD) is arranged to send to the subscribers notification messages including information about the size of the software item and an estimation of the delivery time.

17. The apparatus as claimed in any of claims 11 to 16, **characterised in that** said download server (AAD) is arranged to co-operate with said presence server (PS) to force the presence status of a subscriber, before starting a download session, to a second presence status preventing the subscriber from being disturbed during download, and to restore the first presence status at the end of the download.

18. The apparatus as claimed in any of claims 11 to 17, **characterised in that** said download server (AAD) is arranged to update said storage unit (DB) when a software item is provided by the software provider and at the end of each download to a subscriber.

19. The apparatus as claimed in any of claims 11 to 19, **characterised in that** said download server (AAD) comprises:
- a software update engine (SUE), arranged to receive said software items from said software provider (AP), to recover from said storage unit (DB), for each software item, the list of the subscribers needing it, and to update the information about the software concerned by the download service when a new item is provided by said provider (AP);
- a device profile processor (DPP), connected to said presence server (PS) and to said software update engine (SUE) and arranged to: recover from said presence server (PS) presence status information for the subscribers in said list in order to detect which of them are presently in said predetermined presence status and are available to receive the software items; command the actual download of the software items from said software update engine (SUE) to the available users; force the subscriber's presence status to said second presence status during download and to restore said first presence status at the end of the download; and to update the user profiles in said storage unit (DB) after each download; and
- a database engine (DE), interfacing said software update engine (SUE) and said device profile processor (DPP) with said storage unit (DB).

20. A telecommunication system comprising an apparatus for software download to users of a presence service as claimed in any of claims 11 to 19.

21. The telecommunication system as claimed in claim 20, **characterised in that** it is a mobile communication system.
